# EUROPÄISCHE PATENTSCHRIFT

(11) **EP 0 382 679 B1**
(45) Veröffentlichungstag und Bekanntmachung des Hinweises auf die Patenterteilung: **01.03.1995**
(21) Anmeldenummer: 90810067.0
(22) Anmeldetag: 29.01.1990
(51) Int. Cl.: G03B 23/00, G03B 31/06

(54) **Vorrichtung zur Projektion eines Diapositivs und Wiedergabe einer auf einem Datenträger des Diapositivs abgespeicherten Information**
Device for the projection of a slide and display of information recorded on a data carrier of the slide
Dispositif de projection d'une diapositive et affichage de l'information enregistrée sur un support d'information de la diapositive

(30) Priorität: 03.02.1989 CH 384/89
(43) Veröffentlichungstag der Anmeldung: 16.08.1990
(73) Patentinhaber: Lamperstorfer, Agilolf, Prof. Dr., D-61352 Bad Homburg (DE)
(72) Erfinder: Lamperstorfer, Agilolf, Prof. Dr., D-61352 Bad Homburg (DE)
(74) Vertreter: Keller, René, Dr.

(56) Entgegenhaltungen:
- EP-A- 0 246 799
- EP-A- 0 252 675
- DE-A- 3 248 279
- US-A- 1 388 981
- US-A- 3 879 117
- US-A- 4 014 604

## Beschreibung

Die Erfindung betrifft eine Vorrichtung zur Projektion eines Diapositivs und Wiedergabe einer auf einem Datenträger des Diapositivs abgespeicherten Information gemäß dem Oberbegriff des Patentanspruchs 1.

Eine Vorrichtung dieser Art ist aus der GB-PS 1 388 981 bekannt. Sie besteht aus einem Diaprojektor mit einem Tonkopf für die Wiedergabe einer auf einer Tonspur des Diapositivs aufgezeichneten, akustischen Mitteilung oder akustischen Untermalung. Sobald das Diapositiv im Diaprojektor in die für seine Projektion vorgesehene Endlage gebracht worden ist, wird der Tonkopf mit einer gleichmäßigen Geschwindigkeit über die Tonspur bewegt, um eine möglichst naturgetreue Wiedergabe der auf der Tonspur aufgezeichneten akustischen Mitteilung zu ermöglichen.

Vorrichtungen dieser Art, ähnlich wie mit einem Tonbandgerät gekoppelte Diaprojektoren, werden für sog. Diashows eingesetzt, um ohne Vortragenden die Diapositive den Zuschauern zu erläutern.

In der US-A 3 879 117 wird eine Vorrichtung beschrieben, mit der die auf jeweils einem Diapositiv magnetisch aufgebrachte Information gelesen wird, um dieses entsprechend seiner Information in Bibliotheken einsortieren zu können.

In der US-A 4 014 604 werden auf Diapositiven aufgebrachte magnetische Datenträger sowie eine Vorrichtung beschrieben, mit der die jeweils auf einem Diapositiv aufgebrachte Information ausgelesen werden kann.

In der EP-A 0 246 799 wird ebenfalls eine Vorrichtung beschrieben, mit der Informationen auf Rahmenseiten eines Diapositives aufgebracht -und gelesen werden können. Die aufgebrachten Informationen dienen dazu, Daten insbesondere für Entwicklungslabore anzubringen.

In der EP-A 0 252 675 wird eine Sortiervorrichtung und Speichereinrichtung für Diapositive beschrieben.

Bei einem persönlich mit Hilfe von Diapositiven gehaltenen, namentlich wissenschaftlichen Vortrag stellt sich dem Vortragenden das Problem, die Teilnehmer persönlich anzusprechen, sie mit seinem Vortrag zu fesseln und auf deren Fragen einzugehen. Solche Vorträge verlangen eine große Konzentration des Vortragenden auf die Teilnehmer und auf die Wortwahl bei seinen Darlegungen. Die Zeitpunkte der Demonstrationen von Diapositiven, welche die Darlegungen erläutern oder erst ermöglichen, müssen mit dem Verlauf des Vortrags abgestimmt sein. Die projizierten Diapositive sind jedoch vom Vortragenden nicht zu erkennen, da sie sich in seinem Rücken auf der Leinwand befinden. Ein Diapositiv zur falschen Zeit, ein falsches oder nicht in der richtigen Lage projiziertes Diapositiv verunsichert den Vortragenden, stört seinen Vortragsfluß und erschwert oder verunmöglicht der Zuhörerschaft ein Verstehen und Verfolgen der erläuterten Fakten.

Die bekannten Vorrichtungen der eingangs genannten Art sind weder dazu bestimmt noch geeignet, in einem solchen Vortrag eingesetzt zu werden.

Aufgabe der Erfindung ist es, eine Vorrichtung zu schaffen, die einem Vortragenden, der zur Ergänzung und Erläuterung seines Vortrags Diapositive zeigt, das Halten seines Vortrags erleichtert.

Die erfindungsgemäße Lösung dieser Aufgabe ist Gegenstand des Anspruchs 1.

Bei einer bevorzugten Ausführungsart der Erfindung kann aus einer Menge von Diapositiven eines oder mehrere mittels eines entsprechenden Suchbefehls (Kennzeichnung) automatisch ausgewählt werden. Ferner kann die Reihenfolge der unmittelbar zur Projektion bereitstehenden Diapositive angezeigt werden, um fälschlich vorhandene Diapositive zu erkennen und nicht mehr benötigte Diapositive zu überspringen, sowie deren Projektionslage zu überprüfen und bei falscher Lage sie in ihre für die Projektion richtige Lage zu bringen.

Im folgenden werden Ausführungsbeispiele der Erfindung näher beschrieben. Es zeigen:
- Fig. 1: eine Vorrichtung mit Projektionsteil (Diaprojektor) und Anzeigeeinrichtung,
- Fig. 2: ein Diapositiv mit Datenträger,
- Fig. 3: einen Längsschnitt entlang der Linie III - III in Figur 2 durch das Diapositiv,
- Fig. 4: ein schematisches Blockbild des Diaprojektors und einer Anzeigeeinrichtung,
- Fig. 5: einen Schnitt durch die an eines der Diapositive andrückenden paarigen Andruckelemente senkrecht zur Verschieberichtung der Diapositive,
- Fig. 6: ein schematisches Blockbild eines Teils einer Variante eines Diaprojektors mit zwei Verschiebeeinrichtungen für Diapositive, und
- Fig. 7: ein schematisches Blockbild eines Teils einer Variante eines Diaprojektors mit zwei Verschiebeeinrichtungen und einer Dreh- und Wendeeinrichtung.

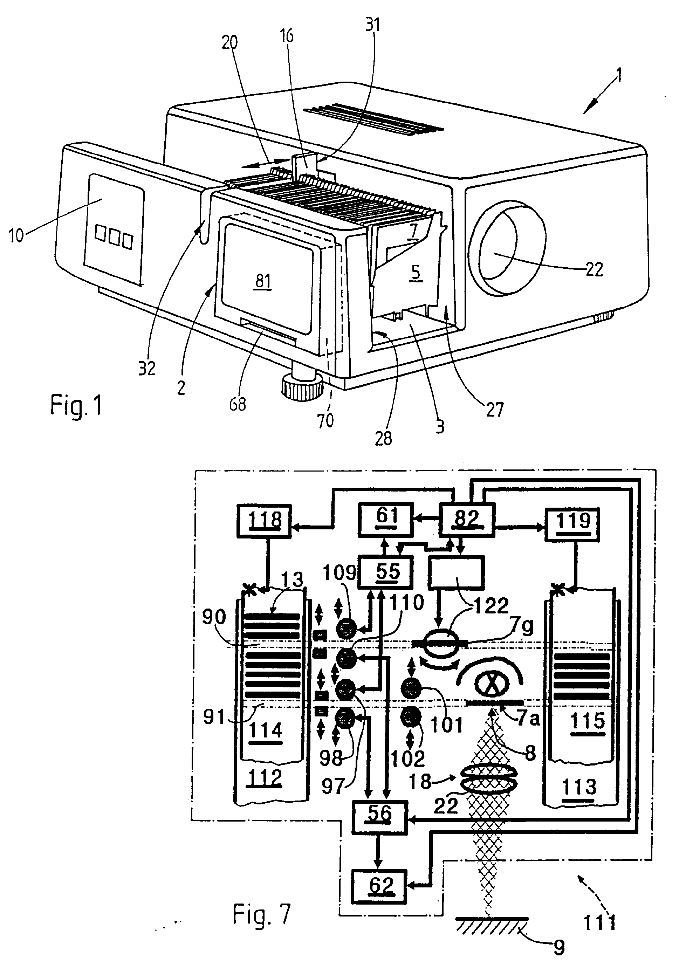

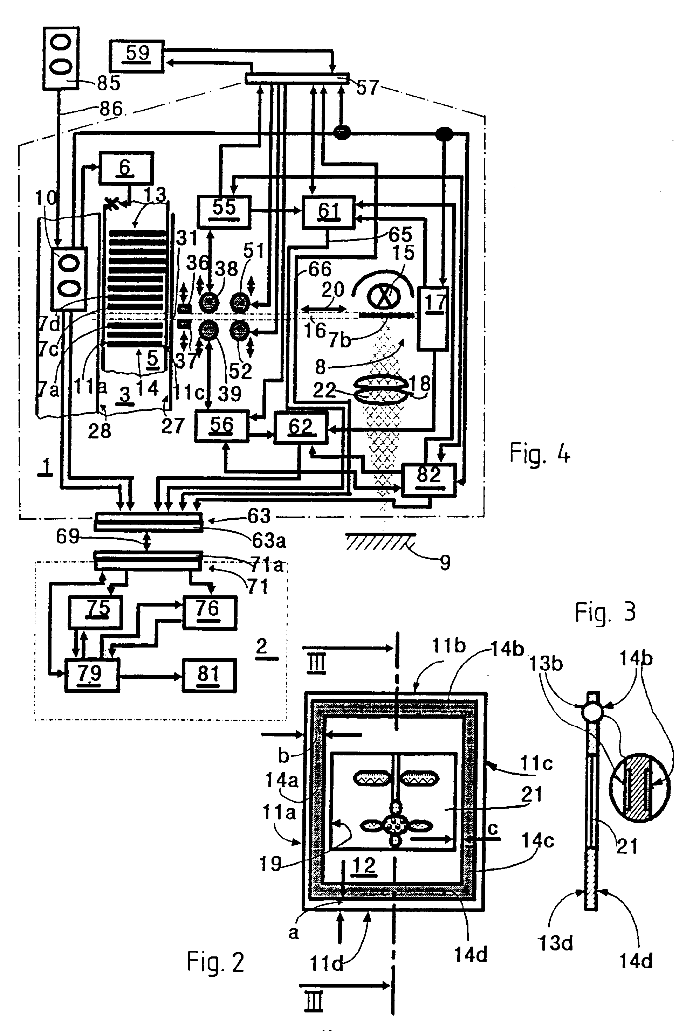

Die in **Figur 1** dargestellte Vorrichtung besteht aus einen Diaprojektor **1** als Projektionsteil, in dessen Längsseite eine Anzeigeeinrichtung **2** angeordnet ist. Der Diaprojektor **1** hat einen Kanal **3**, in dem ein Magazin **5** durch eine in **Figur 1** nicht sichtbare Halte- und Transporteinrichtung **6** vor und zurück bewegt werden kann. Das Magazin **5** ist ein handelsübliches Diamagazin, in dem die Diapositive **7** in gleich distanzierten Fächern senkrecht zur Längsrichtung des Magazins **5** abgelegt sind. Eines der Diapositive **7**, mit **7b** bezeichnet, befindet sich gerade, wie im Blockbild **Figur 4** dargestellt, in einem Projektionsraum **8** des Diaprojektors **1** zur Projektion auf eine Leinwand **9**. Das Fach für das Diapositiv **7b** ist somit im Magazin **5** leer. Vor diesem leeren Fach befinden sich im Magazin **5** das Diapositiv **7a** und weitere Diapositive **7**. Hinter dem leeren Fach steckt im Magazin **5** das Diapositiv **7c** gefolgt von **7d**. Ferner hat der Diaprojektor **1** einen Befehlsteil **10** mit Kommandotasten für Vor- bzw. Rücklauf des Magazins **5**, wobei im Vorlauf das Diapositiv **7b** durch das Diapositiv **7c**, und im Rücklauf es durch das Diapositiv **7a** ersetzt wird.

Jedes der Diapositive **7** hat, wie in **Figur 2** dargestellt, parallel zu den Außenkanten **11** seines Diarahmens **12** beidseits je ein rahmenartiges Magnetband **13** und **14**, wobei die einzelnen Rahmenteile **13a** bis **13d** bzw. **14a** bis **14d** parallel zu den Kanten **11a** bis **11d** des Diapositivs **7** in einem Abstand **a** verlaufen. Die Rahmenteile **13a** und **13c** sind nicht dargestellt. Der Abstand **a** des Magnetbandes **13** bzw **14** von den vier Außenkanten **11** ist gleich und so groß gewählt, daß, wie weiter unten beschrieben, ein Bügel **16** als Verscheibeeinrichtung die Diapositive **7** im Magazin **5** fassen und in den Projektionsraum **8** des Diaprojektors **1** transportieren kann, ohne das Magnetband **13** bzw. **14** zu berühren oder zu überdecken. Die Verschiebung des Bügels **16** erfolgt durch einen Linearantrieb **17** in Verschieberichtung **20**. Die Breite **b** der Magnetbänder **13** und **14** entlang der Kanten **11** ist ebenfalls gleich groß. Sie ist so groß gewählt, daß ein ausreichender Abstand **c** von der Umrandung **19** des Films **21** im Diarahmen **12** vorhanden ist, damit weiter unten beschriebene Räder **40** und **41** der Andruckelemente **38** und **39** zwischen Magnetband **14** und der Umrandung **19** laufen können.

Der Kanal **3** ist wie bei handelsüblichen Diaprojektoren ausgebildet. In der vorderen Hälfte der vertikal verlaufenden Kanalwände **27** und **28** ist je ein Schlitz **31** in der dem Projektionsraum **17** zugewandten Kanalwand **27** und ein Schlitz **32** in der gegenüberliegenden Kanalwand **28** vorhanden, in dem der Bügel **16** die Diapositive **7** vom Magazin **5** zu einem Projektionsraum **17** hin und zurück befördert. Im Projektionsraum **17** wird das Diapositiv **7** mittels einer Projektionslampe **15** durchstrahlt und mit einer Abbildungsoptik **18**, dessen vordere Linse **22** in **Figur 1** zu sehen ist, auf die Leinwand **9** projiziert.

Innerhalb des Schlitzes **31** im Abstand einiger Millimeter von der Kanalwand **27** entfernt und in Höhe des Magnetbandes **14d** bzw. **15d** des durch den Bügel **16** gefaßten und transportierten, auf dem Kopf stehenden Diapositivs **7** (die Kante **11d** zeigt nach unten) sind zwei parallel zur Achse des Kanals **3** bewegliche, federnd gegeneinander drückende Schmutzabstreifer **36** und **37** derart angeordnet, daß sie das Magnetband **13d** und **14d** des mittels des Bügels **16** vom Magazin **5** in den Projektionsraum **8** transportierten Diapositivs **7** von Staub und Schmutz reinigen. Die Schmutzabstreifer **36** und **37** bestehen z. B. aus einem Filzpolster. Handelt sich um ein Diapositiv **7** mit einer Filmaufnahme **21** in Hochformat, so zeigt die Kante **11a** oder **11c** nach unten und die Magnetbänder **13a** und **14a** oder **13c** und **14c** werden gereinigt. Nach den Schmutzabstreifern **36** und **37** sind in Richtung Projektionsraum **8** zwei Paare federnd gegeneinander drückende Andruckelemente **38/39** und **51/52** der Abtasteinrichtung in Verschieberichtung **20** hintereinander angeordnet, wobei die Andruckelemente **38/39** zum Schreiben und Lesen und die Andruckelemente **51/52** zum Löschen von Information auf den Magnetbändern **13** und **14** dienen.

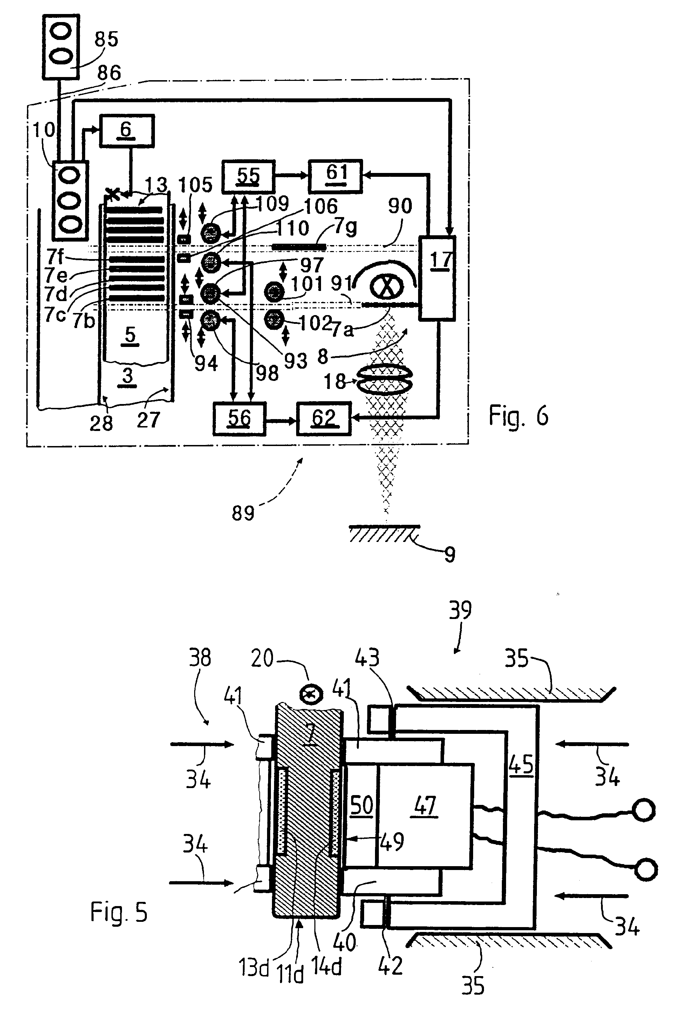

Die Andruckelemente **38** und **39** sind annähernd senkrecht zur Oberfläche des durch den Bügel **16** gehaltenen Diapositivs **7**, d. h. senkrecht zur Oberfläche der Magnetbänder **13** und **14** gegen eine in **Figur 5** schematisch angedeutete Federkraft **34** verschiebbar, aber in Verschieberichtung **20** durch eine ebenfalls in **Figur 5** schematisch dargestellt Führung **35** gehalten. Die beiden Andruckelemente **38** und **39** sind in **Figur 5** gegen eines der Diapositive **7** gedrückt dargestellt. Jedes hat zwei Räder **40** und **41**, welche mit ihren Achsen **42** und **43** in einem Joch **45** gehalten sind. Zwischen den beiden Rädern **40** und **41** liegt ein Tonkopf **47** als Lese- und Aufnahmeteil, dessen nicht dargestellter Spalt einer Aufnahme- und Lesespule sich in **Figur 5** an der Oberfläche **49** des Tonkopfes **47** befindet, welche zum Diapositiv **7** zeigt. Die Oberfläche **49** ist um einige Mikrometer gegenüber der Lauffläche der Räder **40** und **41** zurückgesetzt. Die Position des Andruckelements **38** bzw. **39** ist so gewählt, daß der jeweilige Spalt der Aufnahme- und Lesespule unmittelbar über der Magnetspur **13d** und **14d**, bzw. **13a** und **14a** bzw. **13c** und **14c** des durch den Bügel **16** bewegten Diapositivs **7** liegt. Der Tonkopf **47** ist an seinen beiden Seiten in der Nähe seiner Stirnfläche mit je einer Fase **50** versehen, damit die Andruckelemente **38** und **39** besser über die Kante **11c**, **11d** bzw. **11b** beim Hineinschieben der Diapositive **7** und besser über die Kante **11a**, **11b**, bzw. **11d** beim Hinausschieben gleiten. Die in **Figur 5** dargestellten Achsen **42** und **43** stehen in den Darstellungen der **Figuren 4**, **6** und **7** senkrecht zur Bildebene. Die Andruckelemente **51** und **52** sind analog zu den Andruckelementen **38** und **39** aufgebaut.

Jedes der Andruckelemente **38** und **39** ist mit je einer Schreib-Leseelektronik **55** bzw. **56** elektrisch verbunden. Die Schreib-Leseelektronik **55** bzw. **56** schaltet den Tonkopf **47** entweder auf Aufnahme oder Lesen der auf dem Magnetband **13** bzw. **14** abzuspeichernden oder auszulesenden Information. Beide sind über ein Interface **57** mit einem Personalcomputer **59** und mit je einem Speicher **61** bzw. **62** zum Abspeichern einer gelesenen und auf die Magnetbänder **13** und **14** aufzubringenden digitalen Information von Zeichen verbunden. Die Speicher **61** und **62** sind mittels je eines Leitungsstrangs **65** bzw. **66** mit nicht gesondert dargestellten Steuer- und Datenleitungen elektrisch über ein weiteres Interface **63** mit einer Auswerteeinheit, bevorzugt einem Mikroprozessor **82** und einer Anzeigeeinrichtung **2** verbunden.

Die Anzeigeeinrichtung **2** befindet sich, wie in **Figur 1** dargestellt, derart in einer Vertiefung **70** in einer der Seiten des Diaprojektors **1**, daß ihre Oberfläche mit der Seitenfläche des Diaprojektors **1** fluchtet. Ein nicht dargestellter Rastmechanismus hält die Anzeigeeinrichtung **2** in der Vertiefung **70**. In ihrem unteren Teil in **Figur 1** hat die Anzeigeeinrichtung **2** eine Aussparung **68**, in die man mit ein oder zwei Fingern greifen kann, um ihren Rastmechanismus zu lösen und sie somit aus der Vertiefung **70** herauszunehmen.

Die elektrische Verbindung der Anzeigeeinrichtung **2** mit dem Diaprojektor **1** erfolgt bei in der Vertiefung **70** eingerasterter Anzeigeeinrichtung **2** mittels eines Steckverbinders bestehend aus einer Steckerleiste **63a** als Teil des Interfaces **63**, die geschützt in der Vertiefung **70** untergebracht ist und einer Buchsenleiste **71a** als Teil des Interfaces **71**, welche die Anzeigeeinrichtung **2** trägt. Wird die Anzeigeeinrichtung **2** getrennt vom Diaprojektor **1** aufgestellt, so werden Steckerleiste **63a** und Buchsenleiste **71a** mit einem in **Figur 4** schematisch dargestellten Kabel **69** verbunden.

Der Mikroprozessor **82** ist als steuernde und überwachende Einheit neben den Speichern **61** und **62** mit der Schreib-Leseelektronik **55** und **56**, dem Linearantrieb **17** und dem Befehlsteil **10**, über das Interface **57** mit dem Personalcomputer **59** und über die beiden Interfaces **63** und **71** mit der Anzeigeeinrichtung **2**, sowie über den Befehlteil **10** mit der Halte- und Transporteinrichtung **6** verbunden.

Das Interface **71**, zwei Speicher **75** und **76**, sowie eine Signalaufbereitungsschaltung **79** (ein einfacher Prozessor) und eine elektrooptische Anzeigefläche **81** gehören zur Anzeigeeinrichtung **2**. Die beiden Speicher **75** und **76** sind über die beiden Interfaces **63** und **71** datenmäßig mit den Speichern **61** und **62** verbunden. Die Signalaufbereitungsschaltung **79** ist mit den Speichern **75** und **76** und dem Befehlsteil **10** über die beiden Interfaces **71** und **63**, und mit der elektrooptischen Anzeigefläche **81** verbunden. Auf der Anzeigefläche **81** ist die ausgelesene Information darstellbar. Als Anzeigefläche **81** wird bevorzugt eine Flüssigkeitskristallanzeige (LCD) oder eine Leuchtmatrix, deren Hintergrundbeleuchtung ein- und ausschaltbar ist oder eine Leuchtdiodenanzeige (LED) verwendet.

Zum Aufbringen der Information auf den Magnetbändern **13** und **14** werden die Diapositive **7** in der Lage in das Magazin **5** gesteckt, wie sie später projiziert werden sollen. Der Personalcomputer **59** ist mit dem Diaprojektor **1** über das Interface **57** verbunden. Auf ein entsprechendes Signal des Personalcomputers **59** an das Befehlselement **10**, welches den Linearantrieb **17** in Bewegung setzt, wird ein sich im Projektionsraum **8** befindliches Diapositiv **7b** durch den Bügel **16** zurück in das Magazin **5** auf seinen freien Platz befördert. Wäre kein Diapositiv **7b** im Projektionsraum **8** gewesen, so wäre der Bügel **16** trotzdem in den Projektionsraum **8** gelaufen, jedoch leer zurückgekehrt. Wäre das Magazin **5** manuell durch eine Fehlbedienung um eine Stelle weitergeschoben worden, so daß das aus dem Projektionsraum **8** zurückgeholte Diapositiv **7b** auf einen belegten Platz, z. B. mit dem Diapositiv **7a** belegt, gestoßen wäre, so stößt der Bügel mit einem nicht dargestellten Fühlelement an das Diapositiv **7a**, transportiert das Diapositiv **7b** wieder in den Projektionsraum **8** zurück und es erscheint sowohl auf der Anzeigefläche **81**, wie auch auf dem Bildschirm des Personalcomputers **59** eine Anzeige mit der Aufforderung, die erfolgte Fehlbedienung rückgängig zu machen. Liegt keine Fehlbedienung vor, befördet z. B. ein Vorwärtsbefehl des Personalcomputers **59** das Magazin **5** durch die Halte- und Transporteinrichtung **6** um eine Fachbreite derart nach vorn, daß das nächste Diapositiv **7c** neben dem Schlitz **31** liegt. Der Bügel **16** erfaßt das Diapositiv **7c** und wird mittels des Linearantriebs **17** mit dem Diapositiv **7c** in Richtung Projektionsraum **8** mit einer mehr oder weniger gleichmäßigen Linearbewegung **20** bewegt. Die Rahmenkante **11c** des Diapositivs **7c** drückt nach einem kurzen Weg der gesamten Bewegung die beiden Schmutzabstreifer **37** und **36** derart auseinander, daß sie auf den Magnetbändern **13d** und **14d** bei zu projizierenden Bildern im Querformat und auf den Magnetbändern **13a** und **14a**, bzw **13c** und **14c** bei Hochformat schleifen und befreit damit die Magnetbänder **13d/14d** bzw. **13a/14a** oder **13c/14c** von anhaftendem Staub. Als nächstes drückt die Rahmenkante **11c** bzw. **11d** oder **11b** die Andruckelemente **38** und **39** mit dem Tonkopf **47** auseinander und die federnde Kraft dieser Element **38** und **39** den Tonkopf **47** gegen die Magnetbänder **13d/14d** bzw. **13a/14a** oder **13c/14c**. Die auf den Magnetbändern **13d/14d** bzw. **13a/14a** oder **13c/14c** befindliche digitale Information wird im Takt eines nicht dargestellten Taktgebers des Linearantriebs **17** ausgelesen und in den Speichern **61** und **62** abgespeichert. Anschließend wird das Diapositiv **7c** an den Andruckelementen **51** und **52** (Löschteil) vorbeibewegt, ohne daß diese in Aktion treten. Befindet sich das Diapositiv **7c** im Projektionsraum **8**, wird es von der Projektionslampe **15** durchstrahlt und seine Projektion erscheint auf der Leinwand **9**. Auf dem Bildschirm des Personalcomputers **59** bzw. auf der Anzeigefläche **81** der Anzeigeeinrichtung **2** wird die auf den Magnetbändern **13d/14d** bzw. **13a/14a** oder **13c/14c** gelesene Information, sofern vorhanden, dargestellt. Eine neue Information oder eine erste abzuspeichernde Information wird über die nicht dargestellte Tastatur des Personalcomputers **59** in diesen eingegeben. Diese neue Information wird zusammen mit der alten, sofern eine vorhanden war, wahlweise auf dem Bildschirm des Personalcomputers **59** oder auf der Anzeigefläche **81** oder auf beiden dargestellt, und wird nach Beantwortung der üblichen Sicherung gegen Überschreiben in die Speicher **61** und **62** geladen, sofern deren Speichervolumen ausreichend ist.

Bei zu großer Informationsmenge wird auf dem Bildschirm des Personalcomputers **59** eine Meldung angezeigt. Hierauf kann die Informationsmenge verkleinert werden. Im nächsten Schritt wird die Informationsmenge für die Aufnahme auf die Magnetbänder **13d** und **14d** bzw. **13a/14a** oder **13c/14c** aufgeteilt und "gespiegelt", d.h. die Daten der Datenpakete für die Magnetbänder **13d** und **14d** bzw. **13a/14a** oder **13c/14c** werden so gruppiert, daß das letzte Informationsbit an die erste Stelle kommt. Die derart gruppierten Daten werden für das Magnetband **13d** bzw. **13a** oder **13c** in den Speicher **61** und für das Magnetband **14d** bzw. **14a** oder **14c** in den Speicher **62** eingelesen. Vor Beginn des Einlesens wird eine Start- und nach Beendigung des Einlesens eine Stopinformation auf den entsprechenden Magnetbändern **13d**, **13a**, bzw. **13c**, und **14d**, **14a**, bzw. **14c** abgespeichert. Die Start- bzw die Stopinformation ermöglicht zusammen mit den Pulsen des Linearantriebs **17** erst eine Zuordnung der abgespeicherten Information.

Das Lesen der Information erfolgt in zum Abspeichern umgekehrter Bewegungsrichtung des Diapositivs **7**. Ist das Diapositive **7** jedoch seitenverkehrt eingelegt,so wird zuerst die Stopinformation, dann die Information und zuletzt die Startinformation gelesen. Diese falsche Reihenfolge wird von einem als Auswerteschaltung arbeitenden Mikroprozessor **82**, welcher mit der Lese- und Aufnahmeelektronik **55** und **56** und den Speichern **61** und **62** verbunden ist, erkannt. Diese Feststellung wird durch die Anzeigeeinrichtung **2** auf der Anzeigefläche **81** angezeigt, gleichzeitig veranlaßt der Mikroprozessor **82** jedoch, daß die Daten der Speicher **61** und **62** in "gespiegelter" Form an die Speicher **75** und **76** weitergegeben werden. Hierdurch erscheint die Information auf der Anzeigefläche **81** in einer lesbaren Form. Der Vortragende bekommt somit die Information seines Diapositivs **7** und dessen seitenverkehrten Zustand mitgeteilt.

Zum Vorführen der Diapositive **7** in fortschreitender oder rückschreitender Reihenfolge wird vom Rednerpult aus die entsprechende Kommandotaste eines auf dem Rednerpult liegenden Befehlsteils **85** für Vor- bzw. Rücklauf des Magazins **5**, welches mit einem Kabel **86** mit dem Befehlsteil **10** verbunden ist, vom Vortragenden gedrückt. Hierdurch wird über den Befehlsteil **10** ein Signal an den Mikroprozessor **82** gegeben, der die Signalaufbereitungsschaltung **79** in der Anzeigeeinrichtung **2** aktiviert. Ein im Projektionsraum **8** befindliches Diapositiv z. B. **7b** wird durch den Bügel **16** in das Magazin **5** zurückgebracht, das Magazin **5** wird soweit nach vorn durch die Halte- und Transporteinrichtung **6** geschoben, bis neben dem Schlitz **31** das folgende Diapositiv **7c** im Magazin **5** liegt. Das Verschieben durch den Bügel **16** und der Lesevorgang erfolgt hier, wie bereits oben beim Vorgang der Aufzeichnung der Information beschreiben.

Eine Variante eines Diaprojektors **89** ist in **Figur 6** dargestellt Die **Figur 6** enthält zur vereinfachten Darstellung und zum leichteren Verständnis nur die Unterschiede gegenüber der Darstellung in **Figur 4**, deren Komponenten auch zum vollständigen Funktionieren der erweiterten Version benötigt werden. Die in **Figur 6** dargestellte erweiterte, verbesserte, allerdings auch aufwendigere Ausführungsart hat zwei Bügel **90** und **91**, welche aus dem Magazin **5** Diapositive **7** entnehmen und wieder zurückbringen. Beide Bügel **90** und **91** sind analog zum oben beschriebenen Bügel **16** angeordnet. Der Bügel **90** ist durch fünf Diapositive **7b** bis **7f** im Magazin **5** vom Bügel **91** distanziert. (Es ist auch eine größere oder kleinere Distanz möglich, wobei die Grenze für eine kleinere Distanz durch die konstruktiven Gegebenheiten der Bügel **90** und **91** und des Projektionsraums **8**, und für eine größere Distanz durch die Speichergröße der Speicher **61** und **62** und die Anzeigefläche **81** gegeben ist.) Durch den Bügel **91** werden die Diapositive **7** in den Projektionsraum **8** befördert. Entlang des Weges des Bügels **91** befinden sich analog zum Bügel **16** zwei Schmutzabstreifer **93** und **94**, zwei Andruckelemente **97** und **98** zum Aufnehmen und Lesen der Information und zwei Andruckelemente **101** und **102** zum Löschen der Information. Entlang des Wegs des Bügels **90** befinden sich zwei Schmutzabstreifer **105** und **106** und zwei Andruckelemente **109** und **110** zum Lesen der Information. Andruckelemente zum Löschen sind nicht vorhanden. Die Speicher **61**, **62**, **75** und **76** sind in ihrem Speichervolumen so ausgelegt, daß sie die Information von sieben Diapositiven **7** aufnehmen können, ebenfalls ist die Anzeigefläche **81** so groß ausgelegt, daß die Informationen mehrerer Diapositive **7** z. B. von sieben Diapositiven **7** anzeigbar sind.

Bei einem Diavortrag wird das Magazin **5** in den Kanal **3** per Hand gesteckt bis das vorderste Diapositive **7a** an den Bügel **90** anschlägt. Das Magazin **5** wird durch die Halte- und Transporteinrichtung **6** gehalten. Durch Drücken der Taste des Befehlsteils **10** bzw. **85** für eine vorwärtige Reihenfolge (es ist auch ein Starten über den Personalcomputer **59** möglich) zieht der Bügel **90** das erste Diapositiv **7a** in den Diaprojektor **1**, liest die Information auf den betreffenden Magnetbändern **13** bzw. **14**, speichert die Information in den Speichern **61** und **62** ab, gibt sie an die Speicher **75** und **76** in der Anzeigeeinrichtung **2** weiter, schiebt das Diapositiv **7a** wieder auf seinen Platz im Magazin **5** zurück und holt das nächste Diapositiv **7b**, bis nach sechs gelesenen Diapositiven **7a** bis **7f** das Diapositiv **7a** vor dem Schlitz **31** steht, in dem der Bügel **91** läuft. Das Diapositiv **7a** wird vom Bügel **91** zum Projektionsraum **8** transportiert und über die Abbildungsoptik **18** auf die Leinwand **9** projiziert. Die Andruckelemente **97** , **98**, **101** und **102** treten nicht in Aktion. Sie werden nur zum Löschen einer alten und Aufbringen einer neuen Information benötigt. Gleichzeitig wird das Diapositiv **7g** an den Andruckelementen **109** und **110** vorbeibewegt und gelesen.

Das Lesen der Information, sowie das Feststellen der Lage der Diapositive **7**, normal, seitenverkehrt oder gedreht (in gedrehter Lage (liegendes Bild) kann die Information nicht gelesen werden) dieser sechs Diapositive **7a** bis **7f** vor ihrer Projektion, gestattet es dem Vortragenden einseits in seinem Vortrag effizient auf das jeweils folgende Diapositiv **7** überzuleiten oder es zu überspringen Durch ein erneutes Drücken der Taste des Befehlsteils **10** bzw. **85** wird das Diapositiv **7a** und **7g** wieder in das Magazin **5** zurückgeschoben, das Magazin **5** in Vorwärtsrichtung bewegt, das Diapositiv **7b** und das dem Diapositiv **7g** folgende Diapositiv in den Projetor **1** geschoben, usw. wie bereits oben dargelegt.

Das Aufbringen der Information erfolgt mittels der Linearverschiebung **17** durch den Bügel **91** und den vier Andruckelementen **97**, **98**, **101** und **102**.

In einer weiteren Variante eines Diaprojektors **111** sind anstelle des einen Kanals **3** mit einem Magazin **5** und einer Halte- und Transporteinrichtung **6** zwei Kanäle **112** und **113** an jeder der Längsseiten des Diaprojektors **1**, oder in deren Nähe mit je einem Magazin **114** und **115** und je einer Halte- und Transporteinrichtung **118** und **119**, welche die Magazine **114** und **115** unabhängig voneinander verschieben können, vorhanden. Ein Teilblockschaltbild dieser Version ist mit den zu den Darstellungen in den **Figuren 4** und **6** sich unterscheidenden Anordnungen und Komponenten in **Figur 7** dargestellt. Auch diese Version ist mit einem Personalcomputer **59**, wie der in **Figur 3** dargestellte Diaprojektor **1**, verbunden. Die Diapositive **7** aus dem Magazin **114** im Kanal **112**, wie auch die Diapositive **7** aus dem Magazin **115** werden durch die Andruckelemente zum Lesen **109** und **110** gelesen, und können durch die Andruckelemente zum Löschen **101** und **102** gelöscht und durch die Andruckelemente zum Lesen/Aufnehmen **97** und **98** gelesen bzw. wieder beschrieben werden. Die Bewegungsrichtung zum Lesen der Diapositiv **7** entlang der Andruckelemente **97**, **98**, **109**, **110** erfolgt für die Diapositive **7** aus dem Magazin **114**, wie bereits oben beschrieben, in **Figur 7** von links nach rechts und für die Diapositive **7** aus dem Magazin **115** von rechts nach links, wobei die gelesene Information anschließend "gespiegelt" wird, wie bereits oben im Zusammenhang mit dem ersten Ausführungsbeispiel dargelegt. Ein neues Beschreiben erfolgt immer von rechts nach links, da die bereits auf den Magnetbändern **13** und **14** befindliche Information durch die Löschköpfe **101** und **102** zuerst gelöscht werden muß.

Der Diaprojektor **89** bzw. **111** kann je nach verwendeter Software in dem Personalcomputer **59** folgende Aufgaben ausführen:

Projektion von Diapositiven **7** wie jeder gewöhnliche Diaprojektor.

Auslesen einer Information von Diapositiven **7**, die sich im Magazin **5**, **110** bzw.**115** befinden.

Aussortieren von Diapositiven **7** aus dem Magazin **114** entsprechend bestimmter Suchbefehle des Personalcomputers **59** nach in den Information auf den Diapositiven **7** abgespeicherten Begriffen und Einordnen der ausgewählten Diapositive **7** in das Magazin **115**, bzw. aussortieren von Diapositiven **7** aus einem nur teilweise belegten Magazin **5** und ablegen in neuer Reihenfolg im unbelegten Teil des Magazins **5**.

Auch ein Aussortieren aus dem Magazin **115** und Ablegen in das Magazin **114** ist möglich.

Die in **Figur 7** dargestellte Diaprojektorversion hat eine Dreh- und Wendeeinrichtung **122** für die durch den Bügel **90** transportierten Diapositive **7**. Ein Wenden um einhundertachtzig Grad erfolgt dann, wenn die Andruckelemente zum Lesen **109** und **110** beim Lesen der Information feststellen, daß das Diapositiv **7** seitenverkehrt im Magazin **114** oder **115** lag. Eine Rotation in der Filmebene des Diapositives **7** um neunzig Grad erfolgt dann, wenn die Andruckelemente zum Lesen **109** und **110** keine Information lesen konnten. Wird nach der Rotation eine Information gelesen, war das Diapositiv **7** um neunzig Grad gekippt und liegt jetzt richtig; kommt das Stopzeichen vor der Information, ist das Diapositiv **7** seitenverkehrt; es wird gewendet. Ist nach der Rotation keine Information vorhanden, wird ein zweites Mal um neunzig Grad weiter gedreht. Ist nach diesem zweiten Drehen eine Information vorhanden, so stand das Diapositiv **7** auf dem Kopf; jetzt steht es richtig. Ist die Information nur "gespiegelt" lesbar (Stop- vor Startzeichen), ist das Diapositiv **7** noch seitenverkehrt; es wird gewendet. Ist nach diesem zweiten Drehen immer noch keine Information vorhanden, wird ein drittes Mal um neunzig Grad gedreht. Ist nun die Information vorhanden, so steht das Diapositiv **7** richtig. Bei "gespiegelt" lesbarer Information wird das Diapositiv **7** gewendet. Ist nach dem dritten Drehen immer noch keine Information vorhanden, so war keine Information auf dem Datenträger **13** bzw. **14** und es erscheint auf der Anzeigefläche **81** der Anzeigeeinrichtung **2**, bzw. auf dem Computer **59** eine "Nullinformation".

Anstelle den Steckverbinder **63a/71a** in der Vertiefung **70** zur Aufnahme der Anzeigeeinrichtung **2** im Diaprojektor **1** anzubringen, kann hier das Kabel **69** fest montiert sein, welches in einer nicht dargestellten Aussparung der Vertiefung **70** verstaubar ist. Der Steckverbinder **63a/71a** befindet sich dann unmittelbar an der Rückseite der Anzeigeeinrichtung **2** und ist hier durch ein nicht dargestelltes Verlängerungskabel verlängerbar. Diese Variante hat den Vorteil, daß der die Diapositive **7** Vorführende die Anzeigeeinrichtung **2** so plazieren kann, daß sie gut von ihm zu sehen ist.

Anstelle der Räder **40** und **41** in den Andruckelementen **38**, **39**, **51**, **52**, **79**, **98**, **101**, **102**, **109** und **110** zum Lesen, zur Aufnahme bzw. zum Löschen der auf dem Magnetband **13** und **14** gespeicherten Information, kann auch ein nicht dargestellter schleifender Distanzhalter, der den Lese-Aufnahme-, bzw. Löschteil von Datenträger distanziert, verwendet werden.

Anstelle der rahmenartigen Magnetbänder **13** und **14** können die Magnetbänder auch so angeordet sein, daß sie parallel zu den Rahmenkanten **11a** bis **11d** von jeweils einer Kante **11** bis zur anderen verlaufen. Bevorzugt wird das Bandmaterial aus einem Stück gefertigt und mit dem Rahmenmaterial möglichst eben verschweißt, damit beim Aufzeichnen und Ablesen der Information möglichst gleicher Abstand zum Tonkopf **47** eingehalten werden kann.

Anstelle die Diapositive **7** auf beiden Seiten mit je einem Magnetband **13** bzw. **14** auszurüsten, kann auch nur ein einziges rahmenförmiges Magnetband auf nur einer Seite, oder nur ein einziges lineares Band parallel zur Verschieberichtung **20** vorhanden sein. In diesem Fall genügen in einer Reihe angeordnete einzelne Lese-, Aufnahme- und Löschteile. Soll jedoch auch die Information von seitenverkehrt eingelegten Diapositiven **7** lesbar sein, sollten zwei gegenüberliegende Leseteile vorhanden sein. Hier kann dann ein zweites lineares Band auf der gegenüberliegenden Diapositivseite angebracht werden. Werden jedoch, wie bei der Diaprojektorvariante **111** die Diapositive **7** aufgrund ihrer auf dem Magnetband abgespeicherten Information in die richtige Projektionslage durch Drehen und Wenden gebracht, kann auf die zweiten Lese-, Lösch- und Schreibteile nicht verzichtet werden.

Anstelle einer Aufzeichnung auf den Magnetbändern **13** und **14** kann auch eine optische Aufzeichnung erfolgen, indem z. B. mit einem Nadeldrucker auf eine weiße Unterlage des Diarahmens **12**, z. B. mit einem Neunnadeldrucker, Punktreihen senkrecht zur Verschieberichtung **20** der Diapositive **7** gedruckt werden. Der Lage der gedruckten Punkte in der Punktreihe, sowie ihr Vorhanden- oder Nichtvorhandensein kennzeichnet jeweils einen Buchstaben. Es stehen somit 256 Möglichkeiten von Punkteanordnungen in einer Punktereihe zur Verfügung, was ausreichend für eine Abspeicherung z. B. im ASCII-Code ist. Das Auslesen der Zeichen erfolgt dann über eine optische Abbildung, welche die Punktereihe auf eine Detektordiodenzeile abbildet. Die hierzu notwendige Beleuchtung der Punktereihen kann mittels eines nicht dargestellten Lichtleiters von der Projektionslampe **15** des Diaprojektors **1**, **89** oder **111** oder über eine nicht dargestellte separate Leuchte erfolgen. Das Aufbringen der Zeicheninformation kann auch mit einem Thermoprinter einfarbig oder mehrfarbig erfolgen. Ein Thermoprinter ist geeignet, da die Diarahmen **12** aus einem Thermoplast gefertigt sind, auf den sich die Farbe gut aufschmelzen läßt.

Anstelle den Datenträger **13** bzw. **14** mit gleichem Abstand a von der Rahmenkante **11** des Diapositivs **7** anzubringen, kann auch für jede der vier Seiten ein etwas unterschiedlicher Abstand gewählt werden. D. h. der Abstand zur Rahmenkante **11a**beträgt dann **a₁**, zur Rahmenkante **11b a₂**, usw. Aus diesen unterschiedlichen Abständen **a₁** bis **a₄** kann mittels eines nicht dargestellten Kantendetektors eine eindeutige Lagebeurteilung (seitenverkehrt, auf dem Kopf stehend) der Diapositive **7** erfolgen. Ein Kantendetektor kann z. B. eine Leuchtdiode mit einem Detektor sein. Da der Rahmen **12** und der Datenträger unterschiedliches Absorptions- und Reflexionsverhalten für das Licht der Leuchtdiode aufweisen, kann durch eine einfache Intensitätsmessung z. B. festgestellt werden, welcher Abstand **a₁**, **a₂**, **a₃** bzw. **a₄** gerade vorhanden ist. Diese Meßmethode bietet sich an, falls nur eine Lagekontrolle der Diapositive **7** ohne Auslesen einer Information angestrebt wird. Sobald mit einer Information gearbeitet wird, werden bevorzugt zusätzliche Kennzeichen auf dem Datenträger **13** und **14** abgespeichert, welche der Mikroprozessor **82** oder der Personalcomputer **59** erkennt.

Anstelle die Anzeigeeinrichtung **2** durch ein Kabel **69** mit dem Diaprojektor **1** zu verbinden, kann die Datenübertragung mit einem Sender kurzer Reichweite erfolgen, wobei die Anzeigeeinrichtung **2** dann bevorzugt auf Batteriebetrieb ausgelegt wird, um möglichst unabhängig vom Aufstellungsort zu sein.

Anstelle die Anzeigeeinrichtung **2**, wie oben beschrieben, separat für sich alleine aufzustellen, kann sie in einen gut handtellergroßen, nicht dargestellten Hohlspiegel eingebaut werden. Der Hohlspiegel steht auf dem Rednerpult und ist so ausgebildet, daß ein Vortragender mit Blick auf seine Zuhörer das projizierte Bild im Hohlspiegel erkennt und gleichzeitig die Information auf der Anzeigefläche **81** der Anzeigeeinrichtung **2** lesen kann.

Anstelle das auf die Leinwand **9** projizierte Bild mit dem Hohlspiegel abzubilden, kann es von irgendeinem Raumpunkt aus mit einer nicht dargestellten Fernsehkamera aufgenommen und auf einem nicht dargestellten Fernsehmonitor, der in unmittelbarer Nähe des Rednerpults steht, zusammen mit der überlagerten Information wiedergegeben werden. Die Bildinformation des projizierten Bildes und die Bildinformation der Information werden hierbei auf eine zusätzlich in den TV-Monitor eingebaute nicht dargestellte Mischvorrichtung gegeben, welche die Überlagerung und Synchronisation der beiden Bildinformationen vornimmt.

Anstelle mit einer Fernsehkamera das projizierte Bild auf der Leinwand **9** aufzunehmen, kann es direkt vom jeweils durchleuchteten Diapositiv **7** im Projektionsraum **8** mit einer miniaturisierten Fernsehkamera, z. B. einer CCD-Kamera aufgenommen werden. Es kann auch eine weitere Kamera verwendet werden, welche jeweils das vorhergehende Diapositiv **7** aufnimmt. Die Bilder beider Kameras werden dann räumlich übereinander auf dem Bildschirm des TV-Monitors wiedergegeben. Die zu dem betreffenden Diapositiv **7** gehörende Information steht jeweils neben dem betreffenden Bild.

Auf den Personalcomputer **59** zum Aufbringen der Information kann vollständig verzichtet werden, wenn der Mikroprozessor **82** mit einem Programmspeicher zur Informationsverarbeitung ausgerüstet ist und ein Eingabegerät für die abzuspeichernden Texte im Diaprojektor **1**, **89** oder **111** vorhanden oder an den Diaprojektor **1** anschließbar ist. Die für die Bedienung notwendigen Befehle können auf der Anzeigeeinrichtung **2** dargestellt werden.

Auf die Speicher **75** und **76** kann verzichtet werden, wenn die für die Anzeigefläche **81** notwendigen Signale vom Diaprojektor **1** bzw. **109** geliefert werden.

Anstelle die Projektionslampe **15** zur Beleuchtung der Diapositive **7**, wie in den Figuren **4**, **5**, **6** und **7** schematisch angedeutet in der optischen Achse der Abbildungsoptik **18** anzuordnen, kann sie auch, da der Platz zwischen den beiden Bügeln **90** und **91** klein ist, ober- oder unterhalb der optischen Achse der Abbildungsoptik **18** liegen und ihr Licht mittels eines nicht dargestellten abgewinkelten Lichtleiters auf den Film **21** gelenkt werden. Anstelle eines abgewinkelten Lichtleiters kann auch ein nicht dargestellter Umlenkspiegel verwendet werden.

Anstelle die Projektionslampe **15** zu versetzen, kann auch der Bügel **90** nicht horizontal, sondern vom Kanal **3** bzw. **112** aus derart schräg nach oben (oder auch nach unten) verlaufen, daß die Diapositive **7** über den Projektionsraum **8** bewegt werden. Der Kanal **113** liegt dann höher als der Kanal **114**.

Die beiden Bügel **90** und **91** können auch, wie in **Figur 6** dargestellt, auf annähernd gleicher Höhe verlaufen und die Projektionslampe **15** annähernd in der optischen Achse der Abbildungsoptik **18** liegen, sofern der Verschiebeweg des Bügels **91** bei nur einem Magazin **5** ausgehend vom Kanal **3** größer ist als der des Bügels **90**, so daß das vom Bügel **90** verschobene Diapositiv **7** nicht in die Nähe der Projektionslampe **15** kommt. Eine nicht dargestellte thermische Abschirmung der Projektionslampe **15** verhindert eine Wärmeübertragung auf das vom Bügel **90** verschobene Diapositiv **7**.

Unter der Verwendung des Personalcomputers **59** lassen sich mit entsprechender Software in dessen nicht explizit dargestelltem Speicher die Informationen aller während eines Vortrags gezeigten Diapositive **7** pro Magazin **5** abspeichern und auf dessen Bildschirm darstellen. Die Speicher **61** und **62** werden dann nur als Zwischenspeicher verwendet. Wird eine Rückblende auf bereits gezeigte Diapositive **7** z. B. während einer Diskussion gewünscht, so fährt man mit einem Cursor (Blinklicht auf dem Bildschirm oder Pfeil einer "Maus") des Personalcomputers **59** auf die Informationsdarstellung des gewünschten Diapositivs **7** auf dem Bildschirm. Die Position des Cursors wird über eine handelsübliche Software abgefragt und der Personalcomputer **59** gibt die benötigten Steuerimpulse über das Interface **57** an den Befehlsteil **10**, wodurch das Magazin **5** bzw. **114** in die Position gebracht wird, aus der der Bügel **16** bzw. **91** das gewünschte Diapositiv **7** in den Projektionsraum **8** transportieren kann.

Die Erfindung wirkt als Organisationshilfe für einen Vortragenden während eines Diavortrags. Sie führt anhand der Informationen auf der Anzeigevorrichtung **2** den Vortragenden durch den gesamten Vortrag. Ohne seinen Kopf zu verrenken, kann er schon in der einfachsten Ausführungsart auf der Anzeigeeinrichtung **2** erkennen, welches der Diapositive **7** sich gerade auf der Leinwand **9** befindet, was bei komplizierten Darstellungen eine unschätzbare Erleichterung darstellt. In einer erweitertern Version wird dem Vortragenden auch noch die Information des Diapositivs **7** angezeigt, welches dem gerade auf der Leinwand **9** abgebildeten folgt. Hierdurch erhält er einen roten Faden für seinen Vortrag und kann von einem Diapositiv **7** optimal auf das nächst folgende überleiten, auch kann er es auslassen, falls er seinen Vortrag aufgrund von Zuhörerfragen abgeändert, oder verkürzt hat oder verkürzen mußte. Durch die Eingabe eines Suchwortes kann z. B. ein Diapositiv **7**, welches eine während des Vortrags gestellte Frage erklärt, schnell gefunden werden. Auch läßt sich mittels der Suchbefehle in einfacher Weise ein neuer Diavortrag aus einer anderen Reihe von Diapositiven zusammenstellen. Bei Vorhandensein eines zweiten Magazins können die Diapositive gerade in der gewünschten Reihefolge abgelegt werden oder anschließend nach anderen Gesichtspunkten umsortiert werden.

## Patentansprüche

1. Vorrichtung zur Projektion eines Diapositivs **(7)** und
Wiedergabe einer auf einem Datenträger **(13**, **14)** des Diapositivs **(7)** abgespeicherten Information
auf einer eine Anzeigefläche **(81)** zur Darstellung der Information des ausgelesenen Datenträgers **(13**, **14)** aufweisenden Anzeigeeinrichtung **(2)**,
mit
einem Magazin **(5)** zum Aufbewahren der Diapositive **(7)**,
einer Halte- und Transporteinrichtung **(6)** für das Magazin **(5)** und
einer ersten Verschiebeeinrichtung **(16)**, um die Diapositive **(7)** einzeln aus dem Magazin **(5)** in einen Projektionsraum **(8)** der Vorrichtung zu schieben und einer ersten, der ersten Verschiebeeinrichtung zugeordneten Abtasteinrichtung zum Abtasten des Datenträgers **(13**, **14)**,
**gekennzeichnet durch**
eine zweite Verschiebeeinrichtung **(91, 90)** für die Diapositive **(7)** mit einer zweiten Abtasteinrichtung zum Abtasten des Datenträgers **(13, 14)** auf den Diapositiven **(7)**,
wobei die zweite Abtasteinrichtung einen Leseteil **(109, 110)** für die Information auf dem Datenträger **(13, 14)** aufweist, damit
auf der im Blickfeld eines Vortragenden bzw. eines die Diapositive **(7)** Vorführenden, angeordneten Anzeigefläche **(81)** die Information mindestens eines gerade projizierten und eines anschließend zu projizierenden Diapositivs **(7)** gleichzeitig darstellbar ist.

2. Vorrichtung nach Anspruch 1, **gekennzeichnet durch**
mindestens einen Speicher **(61, 62)** mit einer Speicherkapazität für die Informationen mindestens zweier Diapositive **(7)**.

3. Vorrichtung nach Anspruch 1 oder 2, **dadurch gekennzeich****net**, daß die erste Abtasteinrichtung einen in Verschieberichtung **(20)** der ersten Verschiebeeinrichtung **(16, 90, 91)** unbeweglichen und gegen die Oberfläche der von der ersten Verschiebeeinrichtung **(16, 90, 91)** faß- und verschiebbaren Diapositive **(7)** federnd drückbaren Leseteil **(36, 37)** aufweist, welcher die Information während des Hineinschiebens des Diapositivs **(7)** in den Projektionsraum **(8)** liest.

4. Vorrichtung nach einem der Ansprüch 1 bis 3, **gekennzeich****net durch** einen Mikroprozessor **(82)**, einen mit dem Mikroprozessor **(82)** verbundenen Speicher **(61, 62)**, und ein Interface **(57)** zum Anschluß einer Dateneingabeeinrichtung **(59)**, welches mit dem Mikroprozessor **(82)** verbunden ist, um ein Diapositiv **(7)** entsprechend mindestens eines mittels der Dateneingabeeinrichtung **(59)** eingegebenen und im Speicher **(61, 62)** abgespeicherten Suchwortes aus der Menge der im Magazin **(5, 114)** enthaltenen Diapositive **(7)** mittels der Abtasteinrichtungen **(36, 37, 109, 110)** zwecks Projektion oder Sortierung auszuwählen.

5. Vorrichtung nach Anspruch 4, dadurch gekennzeichnet, daß die erste Abtasteinrichtung **(38, 39, 97, 98, 109, 110)** einen Lese- und Aufnahmeteil **(38, 39, 97, 98)** und einen Löschteil **(51, 52, 101, 102)** hat, welche in Verschieberichtung **(20)** der ersten Verschiebeeinrichtung **(16**, **90**, **91)** unbeweglich und gegen die Oberfläche der von der ersten Verschiebeeinrichtung **(16**, **90**, **91)** faß- und verschiebbaren Diapositive **(7)** federnd drückbar sind, wobei die erste Abtasteinrichtung **(38, 39, 97, 98, 109, 110)** während des Hineinschiebens des Diapositivs **(7)** in den Projektionsraum **(8)** die auf dessen Datenträger **(13, 14)** befindliche Information liest und während des Hinausziehens sie wahlweise unverändert beläßt oder löscht und eine neue mittels der Dateneingabeeinrichtung **(59)** eingegebene Information aufbringt.

6. Vorrichtung nach einem der Ansprüche 4 bis 6, **gekenn****zeichnet durch** eine Dreh- und Wendeeinrichtung **(122)** um ein für die Projektion falsch liegendes Diapositiv **(7)** nach dem Auswerten der durch den Lese- **(109, 110)** bzw. den Lese- und Aufnahmeneteil **(38, 39, 97, 98)** gelesenen und durch den Mikroprozessor **(82)** bzw. durch einen am Interface **(57)** angeschlossenen Mikrocomputer **(59)** ausgewerteten Information des Datenträgers **(13, 14)** in die für die Projektion richtige Lage zu drehen und/oder zu wenden.

7. Vorrichtung nach einem der Ansprüche 1 bis 6, **dadurch** gekennzeichnet, daß
die zweite Verschiebeeinrichtung **(90)** von der ersten **(91)** um mindestens einen Platz eines Diapositivs **(7)** in der Halte- und Transporteinrichtung **(6)** entgegen der Transportrichtung distanziert,
der Leseteil **(109, 110)** der zweiten Abtasteinrichtung in Verschieberichtung der zweiten Verschiebeeinrichtung unbeweglichen angeordnet und
gegen die Oberfläche eines der von der zweiten Verschiebeeinrichtung **(90)** aus dem Magazin **(5, 114)** wahlweise faß- und verschiebbaren Diapositive **(7)** federnd drückbar ist,
um die Information auf dem Datenträger **(13, 14)** während des Verschiebens des Diapositivs **(7)** durch die zweite Verschiebeeinrichtung **(90)** auszulesen und auf der Anzeigeeinrichtung **(2)** darzustellen, oder in einem Speicher **(61, 62, 75, 76)** für eine spätere Anzeige abzuspeichern.

8. Vorrichtung nach einem der Ansprüch 1 bis 7, **dadurch ge****kennzeichnet,** daß eine zweite Halte- und Transporteinrichtung **(119)** zum Halten und Transportieren eines zweiten Magazins **(115)** für Diapositive **(7)** vorgesehen ist, und die erste **(16, 91)** und/oder die zweite Verschiebeeinrichtung **(90)** so ausgebildet ist, daß wahlweise jeweils ein Diapositiv **(7)** des ersten Magazins **(5, 114)** in das zweite Magazin **(115)** oder umgekehrt überführbar ist.

9. Vorrichtung nach einem der Ansprüch 1 bis 8, **dadurch ge****kennzeichnet**, daß die Abtasteinrichtungen einen in Verschieberichtung **(20)** der Verschiebeeinrichtungen **(16, 90, 91)** unbeweglichen und gegen die Oberfläche der von den Verschiebeeinrichtungen **(16, 90, 91)** faß- und verschiebbaren Diapositive **(7)** federnd drückbaren zweiten Leseteil **(110)** bzw. einen zweiten Lese- und Aufnahmeteil **(39, 98)** und einen zweiten Löschteil **(52, 102)** haben, welcher bzw. welche dem ersten Leseteil **(109)** bzw. dem ersten Lese- und Aufnahmeteil **(38, 97)** und dem ersten Löschteil **(51, 101)** gegenübersteht bzw. -stehen.

10. Vorrichtung nach einem der Ansprüch 1 bis 9, **gekennzeich****net durch** einen Bildwiedergabeteil zur Darstellung des durch den Projektionsteil **(1)** projizierten Diapositivs **(7)**, in dem die Anzeigeeinrichtung **(2)** eingebaut ist, damit ein von der Projektionsleinwand **(9)** abgewandter Vortragender auf dem Bildwiedergabeteil sowohl das jeweils projizierte Diapositiv **(7)** als auch die auf der Anzeigeeinrichtung **(2)** dargestellte Information sieht.

11. Vorrichtung nach Anspruch 10, **dadurch gekennzeichnet**, daß eine Bildaufnahmeeinrichtung vorhanden ist, welche das auf die Projektionsleinwand **(9)** jeweils projizierte Diapositiv **(7)** aufnimmt, und daß der Bildwiedergabeteil ein TV-Monitor mit einer elektronischen Mischvorrichtung ist, welche die von der Bildaufnahmeeinrichtung aufgenommenen Bilddaten des Diapositivs **(7)** mit dessen Information und/oder den Informationen nachfolgender Diapositive **(7)** derart mischt, daß sowohl ein Abbild des projizierten Diapositivs **(7)** als auch der Information bzw. Informationen zusammen in einem Bild auf dem TV-Monitor entsteht.

12. Vorrichtung nach einem der Ansprüch 1 bis 11 **dadurch ge****kennzeichnet,** daß die Anzeigeeinrichtung **(2)** bzw. der Bildwiedergabeteil über ein Kabel **(69)** oder eine Sende-Empfangsstrecke mit einem das **(5)** bzw. die Magazine **(114, 115)**, die bzw. den dazugehörenden Verschiebeeinrichtungen **(16, 90, 91)**, die Halte- und Transporteinrichtung bzw. einrichtungen **(6, 118, 119)**, sowie die Abtasteinrichtung bzw. -einrichtungen beinhaltenden Projektionsteil **(1)** verbunden ist, um unabhängig von diesem aufgestellt zu werden.

13. Vorrichtung nach einem der Ansprüche 1 bis 12, **gekennzeichnet durch** eine erste und eine zweite Bildaufnahmeeinrichtung und einen TV-Monitor mit einem Mischer für die Bilder der ersten und zweiten Bildaufnahmeeinrichtung, wobei die erste Bildaufnahmeeinrichtung das jeweils projizierte Diapositiv **(7)** und die zweite Bildaufnahmeeinrichtung das anschließend zu projizierende Diapositiv **(7)** mit der ersten **(16, 91)** oder einer zweiten **(90)** Verschiebeeinrichtung in einen Bereitstellungsraum transportiertes und dort vorzugsweise von der Projektionslampe **(15)** beleuchtetes Diapositiv **(7)** betrachtet, und die von der ersten und der zweiten Bildaufnahmeeinrichtung aufgenommen Bilder zusammen auf dem TV-Monitor darstellbar sind.

## Claims

1. Device for the projection of a slide (7) and the reproduction of information stored on a data carrier (13, 14) of the slide (7) on a display surface (81) on a display device (2) comprising a display surface (81) for displaying the information of the data carrier (13, 14) being read, comprising a magazine (5) for storing the slide (7), a retaining and transporting device (6) for the magazine (5), and a first displacement device in order to displace the slides (7) individually out of the magazine (5) into a projection chamber (8) of the device, and a first scanning device, associated with the first direction of displacement, for scanning the data carrier (13, 14), characterised by a second displacement device (91, 90) for the slides (7) comprising a second scanning device for scanning the data carrier (13, 14) on the slides (7), wherein the second scanning device comprises a read part (109, 110) for the information on the data carrier (13, 14), such that the information of at least one slide which is projected and one slide (7) which is to be projected subsequently can be simultaneously displayed on a display surface (81) in the field of vision of a person giving a talk, or showing the slides (7).

2. Device according to Claim 1, characterised by at least one memory (61, 62) with a memory capacity for the information of at least two slides (7).

3. Device according to Claim 1 or 2, characterised in that the first scanning device comprises a read part (36, 37) which is not movable in the displacement direction (20) of the first displacement device (16, 19, 91), and can be pressed resiliently against the surface of the slides (7), which can be contacted and displaced by the first displacement device (16, 19, 91), and which reads the information whilst the slide (7) is being pushed into the projection chamber (8).

4. Device according to one of Claims 1 to 3, characterised by a microprocessor (82), a memory (61, 62) connected to the microprocessor (82), and an interface (57) for the connection of a data input device (59) which is connected to the microprocessor (82), in order to select, for the purpose of projection or sorting, and by means of the scanning devices (36, 37, 109, 110) a slide (7) from among the slides (7) contained in the magazine (5, 114), corresponding to at least one search marker entered by means of the data input device (59) and stored in the memory (61, 62).

5. Device according to Claim 4, characterised in that the first scanning device (38, 39, 97, 98, 109, 110), comprises a read and receive part (38, 39, 97, 98) and a cancel part (51, 52, 101, 102) which are not movable in the displacement direction (20) of the first displacement device (16, 19, 91), and which can be pressed resiliently against the surface of the slides (7) which can be contacted and displaced by the first displacement device (16, 90, 91), wherein the first scanning device (38, 39, 97, 98, 109, 110) reads the information on the data carrier (13, 14) when the slide (7) is pushed into the projection chamber (8), and, during the drawing out, selectively stores them in unaltered form or deletes them and displays new information entered by means of the data input device (59).

6. Device according to any one of Claims 4 to 6, characterised by a rotating and turning device (122) to rotate and/or turn a slide (7) which is in the wrong position for projection, after the evaluation of the information from the data carrier (13, 14) which was read by the read part (109, 110) or by the read and receive part (38, 39, 97, 98) and evaluated by means of the microprocessor (82) or by a microcomputer (59) connected to the interface (57), into the position which is correct for projection.

7. Device according to one of Claims 1 to 6, characterised in that the second displacement device (90) is distanced from the first (91) by at least the space of a slide (7) in the retaining and transporting device (6), in the direction towards the direction of transport, the read part (109, 110) of the second scanning device is arranged so as to be not movable in the displacement direction of the second displacement device and can be pressed resiliently against the surface of a slide which can selectively be contacted and displaced out of the magazine (5, 114) by means of a second displacement device (90), in order to read out the information on the data carrier (13, 14) whilst the slide (7) is being displaced by means of the second displacement device (90), and to display the information on the display device (2), or to store it in a memory (61, 62, 75, 76) for displaying later.

8. Device according to one of Claims 1 to 7, characterised in that there is provided a second retaining and transport device (119) for retaining and transporting a second magazine (115) for slides (7), and the first (16, 91) and/or the second displacement device (90) is formed such that, selectively, a slide (7) in the first magazine (5, 114) can, in each case, be transferred into the second magazine (115) or vice versa.

9. Device according to any one of Claims 1 to 8, characterised in that the scanning devices have a second read part (110) which is not movable in the direction of displacement (20) of the displacing devices (16, 90, 91) and can be pressed resiliently against the surface of the slide (7) which can be contacted and displaced by the displacement devices (16, 90, 91) or a second read and receive part (39, 98) and a second cancel part (52, 102), which is or are opposite the first read part (109) or the first read and receive part (38, 97) and the third cancel part (51, 101).

10. Device according to any one of Claims 1 to 9, characterised by a picture reproducing part for showing the slide (7) projected by the projecting part (1), in which the display device (2) is installed, in order that a person giving a talk, who is facing away from the projection screen, can see, on the picture reproducing part, both the slide (7) which is projected in each case and the information shown on the display device (2).

11. Device according to Claim 10, characterised in that there is provided a picture receiving device, which receives the slide (7) which is projected onto the projection screen (9) in each case, and in that the picture reproducing part is a TV monitor with an electronic mixing device, which mixes the picture data of the slide (7) which is received by the picture receiving device with the information and/or the information of the following slide (7) in such a manner that both a representation of the projected slide (7) and the information are shown together in one picture on the TV monitor.

12. Device according to any one of Claims 1 to 11, characterised in that the display device (2) or the picture reproducing part is connected, via a cable (69) or a send receive line, to a projection part (1) which contains the magazine (5) or the magazines (114, 115), the displacement device or devices (16, 19,91), the retaining and transporting device or devices (6, 118, 119), and the scanning device or devices belonging thereto, in order that it can be set up independently of this projection part.

13. Device according to any one of Claims 1 to 12, characterised by a first and a second picture receiving device and a TV monitor with a mixer for the pictures of the first and second picture receiving devices, wherein the first picture receiving device views the slide (7) being projected in each case, and the second picture receiving device views the slide (7) which is to be subsequently projected, which was transported into a preparation chamber by the first (16, 91) or a second (90) displacement device and is there preferably illuminated by the projection lamp (15), the pictures received by the first and the second picture receiving device can be shown together on the TV monitor.

## Revendications

1. Dispositif de projection d'une diapositive (7), et d'affichage d'une information mise en mémoire sur un support de données (13, 14) de la diapositive (7) sur un dispositif d'affichage (2) comportant une surface d'affichage (81) pour la représentation de l'information du support de données (13,14) qui est lu, comprenant un magasin (5) pour conserver les diapositives (7), un dispositif de retenue et transporteur (6) pour le magasin (5), un premier dispositif de déplacement (16) pour pousser individuellement les diapositives (7) à partir du magasin (5) dans une chambre de projection (8) du dispositif, et un premier dispositif d'exploration subordonné au premier dispositif de déplacement pour explorer le support de données (13, 14),
caractérisé par un second dispositif de déplacement (91, 90) pour la diapositive (7), comprenant un second dispositif d'exploration pour l'exploration du support de données (13, 14) sur les diapositives (7),
le second dispositif d'exploration comportant une section de lecture (109, 110) de l'information portée sur le support de données (13, 14) de manière que sur la surface d'affichage (81) disposée dans le champ de vision d'un conférencier ou d'un présentateur de la diapositive (7) puissent être représentées en même temps l'information d'au moins une diapositive (7) qui est en cours de projection et d'une diapositive suivante à projeter.

2. Dispositif selon la revendication 1, caractérisé par au moins une mémoire (61, 62) ayant la capacité de contenir les informations de deux diapositives (7) au moins.

3. Dispositif selon la revendication 1 ou 2, caractérisé en ce que le premier dispositif d'exploration comprend une section de lecture (36, 37) immobile dans la direction du déplacement (20) du premier dispositif de déplacement (16, 90, 91) et pouvant être pressée élastiquement contre la surface de la diapositive (7) pouvant être saisie et déplacée par le premier dispositif de déplacement (16, 90, 91), section qui lit l'information pendant l'introduction de la diapositive (7) dans la chambre de projection (8).

4. Dispositif selon l'une quelconque des revendications 1 à 3, caractérisé par un microprocesseur (82), une mémoire (61, 62) reliée au microprocesseur (82), et une interface (54) destinée au raccordement d'un dispositif d'entrée de données (59) qui est relié au microprocesseur (82) de manière à sélectionner une diapositive (7) en fonction d'au moins un mot de recherche entré au moyen du dispositif d'entrée de données (59) et mis en mémoire dans la mémoire (61, 62), à partir de la quantité de diapositives (7) contenues dans le magasin (5, 114), au moyen desdispositifs d'exploration (36, 37, 109, 110) à des fins de projection ou de tri.

5. Dispositif selon la revendication 4, caractérisé en ce que le premier dispositif d'exploration (38, 39, 97, 98, 109, 110) comprend une section de lecture et d'enregistrement (38, 39, 97, 98) et une section d'effacement (51, 52, 101, 102), qui sont immobiles dans la direction du mouvement (20) du premier dispositif de déplacement (16, 90, 91) et peuvent être pressées élastiquement contre la surface de la diapositive (7) qui peut être saisie et déplacée par le premier dispositif de déplacement (16, 90, 91), le premier dispositif d'exploration (38, 39, 97, 98, 109, 110) lisant pendant l'introduction de la diapositive (7) dans la chambre de projection (8) l'information portée sur son support de données (13, 14) et la laissant au choix inchangée ou l'effaçant pendant son retrait et appliquant une nouvelle information entrée au moyen du dispositif d'entrée de données (59).

6. Dispositif selon l'une quelconque des revendications 4 à 6, caractérisé par un dispositif de rotation et de retournement (122) destiné à faire tourner dans son propre plan et/ou retourner une diapositive (7) qui est disposée de façon erronée en vue de la projection et la mettre dans la position correcte après évaluation de l'information du support de données (13, 14) lue par la section de lecture (109, 110) ou par la section de lecture et d'enregistrement (38, 39, 97, 98) et évaluée par le microprocesseur (82) ou par un micro-ordinateur (59) raccordé par l'interface (57).

7. Dispositif selon l'une quelconque des revendications 1 à 6, caractérisé en ce que le second dispositif de déplacement (90) est écarté du premier (91) d'au moins un compartiment pour diapositive (7) dans le dispositif de retenue et transporteur (6) dans le sens inverse de la direction du transport,
la section de lecture (109, 110) du second dispositif d'exploration est disposée de façon immobile dans la direction du déplacement du second dispositif de déplacement et
peut être presséeélastiquement contre la surface de l'une des diapositives (7) qui peut être saisie et déplacée au choix par le second dispositif de déplacement (90) à partir du magasin (5, 114),
de manière à lire l'information sur le support de données (13, 14) pendant le déplacement de la diapositive (7) par le second dispositif de déplacement (90) et la représenter sur le dispositif d'affichage (2), ou la mettre en mémoire dans une mémoire (61, 62, 75, 76) pour un affichage subséquent.

8. Dispositif selon l'une quelconque des revendications 1 à 7, caractérisé en ce qu'il est prévu un second dispositif de retenue et transporteur (119) pour retenir et transporter un second magasin (115) pour diapositives (7), et le premier (16, 91) et/ou le second (90) dispositif de déplacement est constitué de manière qu'une diapositive (7) du premier magasin (5, 114) puisse être transférée au choix dans le second magasin (115), ou inversement.

9. Dispositif selon l'une quelconque des revendications 1 à 8, caractérisé en ce que les dispositifs d'exploration comprennent une seconde section de lecture (110), ou une seconde section de lecture et d'enregistrement (39, 98) et une seconde section d'effacement (52, 102), immobile(s) dans la direction de déplacement (20) des dispositifs de déplacement (16, 90, 91) et pouvant être pressée(s) élastiquement contre la surface de la diapositive (7) qui peut être saisie et déplacée par les dispositifs de déplacement (16, 90, 91), section(s) qui est (sont) disposée(s) face à la première section de lecture (109), ou, respectivement, à la première section de lecture et d'enregistrement (38, 97) et à la première section d'effacement (51, 101).

10. Dispositif selon l'une quelconque des revendications 1 à 9, caractérisé par une section de reproduction d'image pour représenter la diapositive (7) projetée par la section de projection (1), dans laquelle est incorporé le dispositif d'affichage (2), de manière qu'un conférencier qui tourne le dos à l'écran de projection (9) voie sur la section de reproduction d'image aussi bien la diapositive (7) qui est projetée que l'information montrée sur le dispositif d'affichage (2).

11. Dispositif selon la revendication 10, caractérisé en ce qu'il est prévu un dispositif de réception d'image qui reçoit la diapositive (7) projetée sur l'écran de projection (9), et en ce que la section de reproduction d'image est constituée par un moniteur de télévision comprenant un dispositif mélangeur électronique qui mélange les données d'image de la diapositive (7) reçues par le dispositif de réception d'image avec son information et/ou les informations de diapositives suivantes (7) de manière qu'une image aussi bien de la diapositive projetée (7) que de l'information ou des informations apparaisse regroupée en une image sur le moniteur de télévision.

12. Dispositif selon l'une quelconque des revendications 1 à 11, caractérisé en ce que le dispositif d'affichage (2) ou la section de reproduction d'image est relié par l'intermédiaire d'un câble (69) ou d'une section d'émission-réception avec une section de projection (1) comportant le magasin (5) ou les magasins (14, 115), avec le ou les dispositifs de déplacement associés (16, 90, 91), avec le ou les dispositifs de retenue et transporteurs (6, 118, 119) ainsi qu'avec le ou les dispositifs d'exploration, de manière à être indépendant de ceux-ci.

13. Dispositif selon l'une quelconque des revendications 1 à 12, caractérisé par un premier et un second dispositifs de réception d'image et un moniteur de télévision comprenant un mélangeur des images du premier et du second dispositif de réception d'image, le premier dispositif de réception d'image considérant la diapositive projetée (7) et le second dispositif de réception d'image considérant la diapositive (7) à projeter ensuite et transportée par le premier (16, 91) ou par un second (90) dispositif de déplacement dans une chambre de préparation et éclairée en cet endroit de préférence par la lampe de projection (15), et les images reçues par le premier et le second dispositifs de réception d'images pouvant être représentées ensemble sur le moniteur de télévision.
